# FASCICULE DE BREVET EUROPEEN

(11) **EP 0 309 307 B1**
(45) Date de publication et mention de la délivrance du brevet: **11.08.1993**
(21) Numéro de dépôt: 88402248.4
(22) Date de dépôt: 07.09.1988
(51) Int. Cl.: H01H 35/14, B60K 28/14

(54) **Coupe-circuit électrique à inertie**
Elektrisches Massenkraftschalter
Inertial electrical switch

(30) Priorité: 21.09.1987 FR 8713043
(43) Date de publication de la demande: 29.03.1989
(73) Titulaire: AUTOMOBILES PEUGEOT, 75116 Paris (FR); AUTOMOBILES CITROEN, 92200 Neuilly-sur-Seine (FR)
(72) Inventeur: Landais, Jean, F-95000 Jouy-le-Moutier (FR)
(74) Mandataire: Moncheny, Michel

(56) Documents cités:
- CA-A- 961 138
- CH-A- 506 876
- CH-A- 506 876
- DE-A- 3 128 594
- FR-A- 2 151 585
- FR-A- 2 191 498
- US-A- 3 406 774

## Description

La présente invention a pour objet un coupe-circuit électrique à inertie.

Elle concerne plus particulièrement un coupe-circuit utilisé dans un véhicule automobile pour interrompre au moins un circuit électrique en cas de choc et/ou de retournement du véhicule.

Les documents FR-A-2 151 585 et FR-A-2 191 241 décrivent et représentent un coupe-circuit à inertie du type comportant un piston auquel est fixé un élément conducteur de l'électricité et qui peut coulisser axialement à l'intérieur d'un boîtier entre une position de repos, dans laquelle l'élément conducteur est en appui contre deux plots de contact d'un circuit électrique qu'il relie entre eux, et une position de coupure dans laquelle le circuit électrique est interrompu, et une bille qui, dans la position de repos, est maintenue serrée élastiquement, par un ressort de tarage agissant sur le piston, entre un siège concave fixe du boîtier et un siège concave du piston, la bille étant maintenue en position sensiblement au centre d'une chambre du boîtier à l'intérieur de laquelle elle peut s'échapper radialement pour permettre au piston d'occuper sa position de coupure.

Selon ces documents le coupe-circuit est prévu pour être disposé à l'intérieur du véhicule automobile de façon à ce que l'axe général du boîtier soit vertical et que la bille, en cas de collision, quitte ses deux sièges concaves sous l'effet de l'accélération latérale qu'elle subit.

Ce type de coupe-circuit présente plusieurs inconvénients. En cas de retournement du véhicule le coupe-circuit est inefficace car le piston ne peut pas coulisser axialement par rapport au boîtier à l'encontre de la force élastique exercée par le ressort de tarage, l'élément conducteur étant en appui contre les deux plots de contact fixes du circuit électrique. De plus, lors de l'assemblage des différents composants du coupe-circuit, il n'est pas possible de garantir que l'élément conducteur est, dans sa position de repos, en appui contre les deux plots de contact, notamment dans le cas où l'effort élastique exercé par le ressort de tarage sur le piston est trop important.

Afin de remédier à ces inconvénients, l'invention propose un coupe-circuit à inertie du type mentionné plus haut, caractérisé en ce que chacun des plots de contact est monté coulissant axialement par rapport au boîtier, pour permettre au piston de coulisser axialement à l'encontre de la force élastique exercée par le ressort de tarage, et est sollicité élastiquement en appui contre l'élément conducteur.

Grâce à ces caractéristiques, un coupe-circuit à inertie selon l'invention permet, lorsqu'il est disposé dans un véhicule automobile de manière que l'axe du boîtier s'étende parallèlement à la direction principale de déplacement du véhicule, de provoquer une interruption du circuit électrique en cas de collision latérale ou de retournement du véhicule, ainsi qu'en cas, par exemple de choc frontal.

L'invention propose également d'équiper un véhicule automobile au moyen de deux coupe-circuits à inertie selon l'invention, qui sont disposés parallèlement à la direction principale de déplacement du véhicule et en sens opposés, et qui sont reliés au circuit électrique du véhicule que l'on désire interrompre.

Selon une autre caractéristique de l'invention, chacun des deux commutateurs à inertie est disposé respectivement au voisinage d'un des deux bords latéraux supérieurs de la caisse du véhicule.

Grâce à cet agencement, le circuit électrique du véhicule est interrompu quelle que soit la direction du choc résultant d'une collision, ou en cas de retournement du véhicule.

Selon un mode de réalisation préféré du coupe-circuit à inertie, chacun des plots de contact est monté coulissant dans un trou borgne du boîtier à l'intérieur duquel est disposé un ressort de compression.

Afin de limiter l'encombrement axial du coupe-circuit, le siège fixe est formé sur une face d'une paroi radiale interne du boîtier, les plots de contact étant agencés sur l'autre face de cette paroi et le piston comportant au moins un prolongement axial traversant la paroi et à l'extrémité duquel est fixé l'élément conducteur.

Selon d'autres caractéristiques, le coupe-circuit comporte une seconde paire de plots de contact d'un autre circuit électrique, agencés en vis-à-vis des deux plots de contact du premier circuit électrique, et contre lesquels l'élément conducteur est en appui lorsque le piston occupe sa position de coupure. Chacun des plots de contact de la seconde paire de plots peut être monté coulissant dans un trou borgne du boîtier à l'intérieur duquel est disposé un ressort de compression.

D'autres caractéristiques et avantages de l'invention apparaîtront à la lecture de la description détaillée qui va suivre pour la compréhension de laquelle on se reportera aux dessins annexés dans lesquels :
- la figure 1 est une vue en coupe axiale d'un coupe-circuit à inertie selon l'invention représenté dans sa position de repos ;
- la figure 2 est une vue en coupe axiale du coupe-circuit de la figure 1, représenté dans sa position de coupure ;
- la figure 3 est une vue en perspective d'un véhicule automobile équipé de deux coupe-circuits selon l'invention; et
- la figure 4 est une vue de face du véhicule de la figure 3.

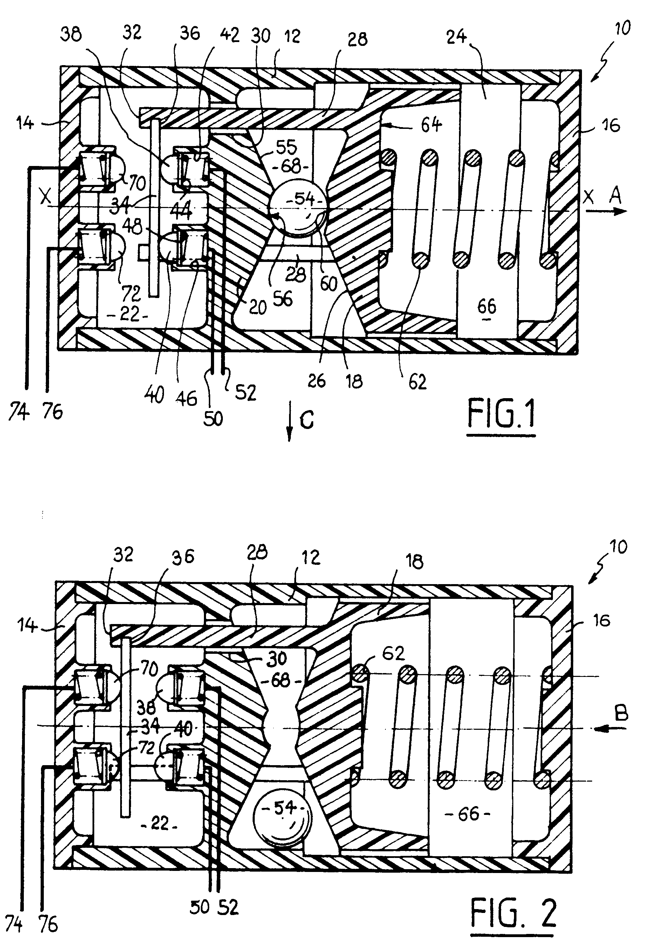

Le coupe-circuit représenté aux figures 1 et 2 comprend un boîtier 12 de forme générale cylindrique et qui est fermé à ses deux extrémités opposées par deux bouchons 14 et 16. Le boîtier cylindrique 12 et les bouchons 14 et 16 peuvent par exemple être réalisés en matière plastique et fixées entre-eux par soudage par ultrasons.

Un piston creux 18 est monté coulissant à l'intérieur du boîtier 12. Le piston 18 peut coulisser parallèlement à l'axe X-X du boîtier 12 entre une position de repos, représentée à la figure 1 et une position coupure représentée à la figure 2.

Le boîtier cylindrique 12 comporte une paroi radiale interne intermédiaire 20 qui délimite deux chambres 22 et 24 à l'intérieur du boîtier 12. Le piston 18 est monté coulissant à l'intérieur de la chambre 24 et comporte, à sa face avant 26 tournée vers la paroi radiale interne 20, trois prolongements axiaux 28 qui traversent la paroi radiale 20 par trois orifices axiaux de passage 30 correspondant. Les extrémités libres 32 des prolongements axiaux 28 du piston 18 portent un élément conducteur de l'électricité 34.

L'élément conducteur 34, qui dans le mode de réalisation représenté aux figures est constitué par un disque métallique, est emboîté dans trois portions de gorges internes radiales 36 formées au voisinage des extrémités libres 32 des prolongements axiaux 28.

Dans la position de repos représentée à la figure 1, l'élément conducteur 34 est en appui contre deux plots de contact 38 et 40 d'une première paire de plots de contact électrique.

Conformément à l'invention chacun des deux plots de contact 38, 40 est monté coulissant axialement dans le boîtier 12. A cet effet le plot de contact 38 est monté coulissant dans un trou borgne 42 de la paroi radiale interne 20 du boîtier et il est sollicité élastiquement en appui contre l'élément conducteur 34 par un ressort de compression métallique 44 disposé à l'intérieur du trou borgne 42 et qui le sollicite en permanence vers la gauche, en considérant la figure 1. De la même manière le plot de contact 40 est monté coulissant dans un trou borgne 46 et est sollicité par un ressort métallique de compression 48.

Par l'intermédiaire des ressorts métalliques 44 et 48, chacun des deux plots de contact 38 et 40 est relié électriquement à un fil 52, 50 respectivement, d'un circuit électrique que l'on désire interrompre en cas de choc.

L'élément à inertie, sensible aux accélérations subies par le coupe-circuit en cas de choc, est une bille sphérique 54.

Dans sa position de repos, la bille 54 est maintenue serrée élastiquement entre un siège concave fixe 56 formé sur la face 55 de la paroi radiale interne 20 délimitant la chambre 24, et un siège concave mobile 60 formé sur la face avant 26 du piston coulissant 18.

La bille 54 est pincée élastiquement entre les deux sièges 56 et 60 grâce à l'action d'un ressort de tarage 62. Le ressort 62 est un ressort de compression qui prend appui sur le fond latéral de droite 16 du boîtier 12 pour solliciter élastiquement le piston creux 18 sur la face interne 64 duquel il prend appui.

Le piston 18 partage la chambre 24 du boîtier cylindrique 12 en deux chambres 66 et 68. Le ressort de tarage 62 est disposé dans la chambre 66 tandis que, dans sa position de repos, la bille 54 est maintenue sensiblement au centre de la chambre 68 du boîtier 12 délimitée par la paroi radiale interne 20 et par le piston 18.

Comme on peut le constater à la figure 2, la bille 54 peut s'échapper radialement à l'intérieur de la chambre 68 pour permettre au piston 18, sous l'action du ressort de tarage 62, de venir occuper sa position de coupure dans laquelle le circuit électrique 50, 52 est interrompu. Les faces en vis-à-vis 55 et 26 de la paroi radiale interne 20 du piston 18 présentent un profil conique de façon à ménager un espace annulaire périphérique suffisant pour recevoir la bille 54 de manière à ce qu'elle ne gêne pas les déplacements du piston 18.

Le coupe-circuit 12 comporte également une seconde paire de plots de contact 70, 72 dont chacun est relié à un fil 74, 76 d'un second circuit électrique tel que, par exemple un circuit de secours temporisé. Les plots de contact 70 et 72 ont une structure, identique à celle des plots 38 et 40, qui leur permet de coulisser axialement par rapport au boîtier 12.

Comme on peut le constater aux figures 1 et 2, l'élément conducteur 34 relie électriquement les plots 70 et 72 lorsque le piston occupe sa position de coupure, tandis que le second circuit électrique 74, 76 est interrompu lorsque le piston est dans sa position de repos.

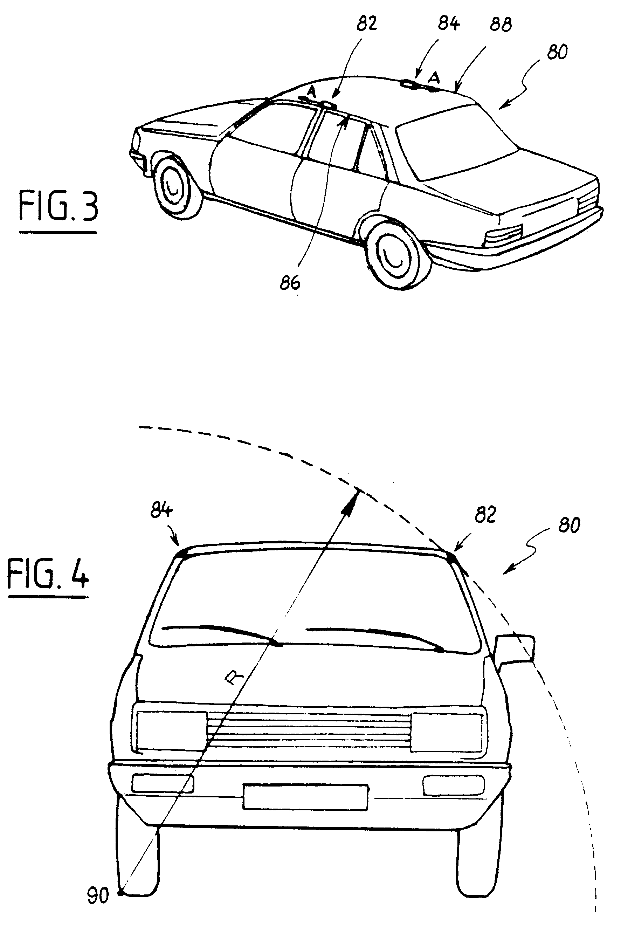

On a représenté aux figures 3 et 4 un véhicule automobile 80 qui est équipé de deux coupe-circuits à inertie 82 et 84 réalisés conformément aux enseignements de l'invention.

Les deux coupe-circuits 82 et 84 sont disposés à l'intérieur du véhicule de façon que l'axe de leur boîtier respectif soit parallèle à l'axe général du véhicule et donc à la direction principale de déplacement de ce dernier.

Les deux coupe-circuits sont reliés au même circuit électrique que l'on désire interrompre en cas de choc et sont bien entendu disposés en sens opposés de façon à provoquer l'interruption du circuit tant en cas de choc avant qu'en cas de choc arrière.

Les coupe-circuits sont disposés chacun respectivement au voisinage d'un des deux bords latéraux supérieurs 86 et 88 de la caisse du véhicule 80, ceci afin d'augmenter le rayon maximal R séparant le point de contact 90 des roues du véhicule avec le sol du coupe-circuit opposé, et donc la sensibilité de déclenchement du coupe-circuit en cas de retournement du véhicule.

On décrira maintenant le mode de fonctionnement du coupe-circuit.

En cas de choc axial, c'est-à-dire si la bille 54 subit une accélération parallèle à l'axe X-X du boîtier cylindrique 12 et dans la direction indiquée par la flèche A de la figure 1, celle-ci se déplace vers la droite à l'encontre de la force exercée par le ressort de tarage 62. Ce déplacement est rendu possible par le montage coulissant et élastique des plots de contact 38 et 40 par rapport au boîtier cylindrique 12. L'action de la bille 54 et du piston 18 sur le ressort 62 provoque en écartement relatif des sièges 56 et 60 qui a pour conséquence de permettre à la bille 54 de s'échapper radialement à l'intérieur de la chambre 68.

Dès que la bille 54 a quitté les sièges 58 et 60, le piston 18 se déplace, vers la gauche en considérant la figure 2 dans la direction indiquée par la flèche B sous l'action du ressort de tarage 66.

Lors de ce déplacement du piston 18 l'élément conducteur 34 s'éloigne des deux plots de contact 38, 40 et provoque ainsi l'interruption du circuit électrique 50, 52. Le piston 18 poursuit sa course jusqu'à ce que l'élément 34 vienne prendre appui sur les deux plots de contact 70 et 72 pour établir une liaison électrique à l'intérieur du second circuit électrique 74, 76.

En cas de choc latéral, ou de retournement du véhicule, seule la bille 54 subit, à partir de sa position de repos, une accélération radiale, selon la direction indiquée par la flèche C de la figure 1 qui provoque son échappement à l'intérieur de la chambre 68 du boîtier cylindrique 12 et un déplacement consécutif du piston 18 similaire à celui qui a été décrit dans le cas d'une accélération axiale de la bille 54.

## Revendications

1. Coupe-circuit à inertie (10) du type comportant un piston (18) auquel est fixé un élément conducteur de l'électricité (34) et qui peut coulisser axialement à l'intérieur d'un boîtier (12) entre une position de repos, dans laquelle l'élément conducteur est en appui contre deux plots de contact (38,40) d'un circuit électrique (50,52) qu'il relie entre eux, et une position de coupure dans laquelle le circuit électrique est interrompu, et une bille (54) qui, dans ladite position de repos, est maintenue serrée élastiquement, par un res sort de tarage (62) agissant sur le piston (18), entre un siège concave fixe (56) du boîtier et un siège concave (60) du piston, la bille (54) étant maintenue en position sensiblement au centre d'une chambre (68) du boîtier à l'intérieur de laquelle elle peut s'échapper radialement pour permettre au piston d'occuper sa position de coupure, caractérisé en ce que chacun des plots de contact (38,40) est monté coulissant axialement par rapport au boîtier, pour permettre au piston de coulisser axialement à l'encontre de la force élastique exercée par le ressort de tarage, et est sollicité élastiquement en appui contre l'élément conducteur.

2. Coupe-circuit à inertie selon la revendication 1, caractérisé en ce que chacun des plots de contact (38,40) est monté coulissant dans un trou borgne (42,46) du boîtier à l'intérieur duquel est disposé un ressort de compression (44,46).

3. Coupe-circuit à inertie selon l'une des revendications 1 ou 2, caractérisé en ce que le siège concave fixe (56) est formé sur une face (55) d'une paroi radiale interne (20) du boîtier, en ce que les plots de contact sont agencés sur l'autre face de cette paroi, et en ce que le piston comporte au moins un prolongement axial (28) traversant la paroi (20) et à l'extrémité libre (32) duquel est fixé l'élément conducteur (34).

4. Coupe-circuit à inertie selon l'une quelconque des revendications précédentes, caractérisé en ce qu'il comporte une seconde paire de plots de contact (70,72) d'un autre circuit électrique (74,76), agencés en vis-à-vis desdits deux plots de contact (38,40), et contre lesquels l'élément conducteur (34) est en appui lorsque le piston (18) occupe sa position de coupure.

5. Coupe-circuit à inertie selon la revendication 4, caractérisé en ce que chacun des plots de contact (70, 72) de ladite seconde paire est monté coulissant dans un trou borgne du boîtier à l'intérieur duquel est disposé un ressort de compression.

6. Véhicule (80), notamment véhicule automobile routier, dont au moins un circuit électrique est interrompu en cas de choc, caractérisé en ce qu'il est équipé de deux coupe-circuits à inertie (82,84) selon l'une quelconque des revendications précédentes, qui sont disposés parallèlement à la direction principale de déplacement du véhicule et en sens opposés, et qui sont reliés audit circuit électrique du véhicule.

7. Véhicule selon la revendication 6, caractérisé en ce que chacun des deux coupe-circuits (82,84) à inertie est disposé respectivement au voisinage d'un des deux bords latéraux supérieurs (86,88), de la caisse du véhicule.

## Claims

1. Inertia-actuated circuit breaker (10) of the type comprising a piston (18) to which there is fixed an electrically conductive element (34) and which is axially slidable inside a casing (12) between a rest position in which the conductive element bears against two contact studs (38, 40) of an electric circuit (50, 52) which it interconnects and a circuit breaking position in which the electric circuit is interrupted, and a ball (54) which, in said rest position, is resiliently held by a calibrating spring (62) acting on the piston (18) between a stationary concave seat (56) of the casing and a concave seat (60) of the piston, the ball (54) being held in position substantially in the centre of a chamber (68) of the casing inside which it can escape radially to allow the piston to occupy its circuit-breaking position, characterised in that each of the contact studs (38, 40) is axially slidably mounted relative to the casing to permit the piston to slide axially in opposition to the resilient force exerted by the calibrating spring and is resiliently biased against the conductive element (34).

2. Inertia-actuated circuit breaker according to claim 1, characterised in that each of the contact studs (38, 40) is slidably mounted in a blind hole (42, 46) of the casing inside which a compression spring (44, 46) is arranged.

3. Inertia-actuated circuit breaker according to one of claims 1 or 2, characterised in that the stationary concave seat (56) is formed on a face (55) of an internal radial wall (20) of the casing, in that the contact studs are arranged on the other face of this wall and in that the piston comprises at least one axial extension (28) traversing the wall (20) and at the free end (32) of which the conductive element (34) is fixed.

4. Inertia-actuated circuit breaker according to any one of the preceding claims, characterised in that it comprises a second pair of contact studs (70, 72) of a further electric circuit (74, 76) arranged opposite said two contact studs (38, 40) and against which the conductive element (34) bears when the piston (18) occupies its circuit-breaking position.

5. Inertia-actuated circuit breaker according to claim 4, characterised in that each of the contact studs (70, 72) of said second pair is slidably mounted in a blind hole of the casing inside which a compression spring is arranged.

6. Vehicle (80), in particular a road motor vehicle, of which at least one electric circuit is interrupted in the event of impact, characterised in that it is equipped with two inertia-actuated circuit breakers (82, 84), according to any one of the preceding claims, which are arranged parallel to the main direction of travel of the vehicle and in opposite directions and which are connected to said electric circuit of the vehicle.

7. Vehicle according to claim 6, characterised in that each of the two inertia-actuated circuit breakers (82, 84) is arranged respectively in the vicinity of one of the two upper lateral edges (86, 88) of the vehicle body.

## Patentansprüche

1. Trägheitssicherung (10), bestehend aus einem Kolben (18), an dem ein elektrisch leitendes Element (34) befestigt ist und der axial im Inneren eines Gehäuses (12) zwischen einer Ruhestellung, in der das leitende Element an zwei Kontaktelementen (38, 40) eines Stromkreises (50, 52) anliegt, die es miteinander verbindet, und einer Unterbrechungsstellung gleiten kann, in der der Stromkreis unterbrochen ist, und einer Kugel (54), die in der Ruhestellung durch eine auf den Kolben (18) einwirkende Tarierungsfeder (62) zwischen einem feststehenden konkaven Sitz (56) des Gehäuses und einem konkaven Sitz (60) des Kolbens elastisch eingeklemmt gehalten ist, wobei die Kugel (54) im wesentlichen in der Mitte einer Kammer (68) des Gehäuses in Stellung gehalten ist, die sie radial verlassen kann, um es dem Kolben zu ermöglichen, seine Unterbrechungsstellung einzunehmen, dadurch gekennzeichnet, daß jedes Kontaktelement (38, 40) bezüglich des Gehäuses axial verschiebbar montiert ist, um es dem Kolben zu gestatten, entgegen der von der Tarierungsfeder ausgeübten Federkraft axial zu gleiten, und elastisch an das leitende Element angedrückt ist.

2. Trägheitssicherung nach Anspruch 1, dadurch gekennzeichnet, daß jedes Kontaktelement (38, 40) in einem Sackloch (42, 46) des Gehäuses verschiebbar montiert ist, in dem eine Druckfeder (44, 46) angeordnet ist.

3. Trägheitssicherung nach einem der Ansprüche 1 oder 2, dadurch gekennzeichnet, daß der feststehende konkave Sitz (56) auf einer Seite (55) einer radialen Innenwand (20) des Gehäuses geformt ist, daß die Kontaktelemente auf der anderen Seite dieser Wand vorgesehen sind und daß der Kolben wenigstens eine die Wand (20) durchquerende axiale Verlängerung (28) umfaßt, an deren freiem Ende (32) das leitende Element (34) befestigt ist.

4. Trägheitsunterbrecher nach einem der vorhergehenden Ansprüche, dadurch gekennzeichnet, daß er ein zweites Paar von Kontaktelementen (70, 72) eines anderen Stromkreises (74, 76) umfaßt, die gegenüber den Kontaktelementen (38, 40) angeordnet sind und an denen das leitende Element (34) anliegt, wenn der Kolben (18) seine Unterbrechungsstellung einnimmt.

5. Trägheitsunterbrecher nach Anspruch 4, dadurch gekennzeichnet, daß jedes Kontaktelement (70, 72) des zweiten Paars verschiebbar in einem Sackloch des Gehäuses montiert ist, in dem eine Druckfeder angeordnet ist.

6. Fahrzeug (80), insbesondere Straßen-Kraftfahrzeug, bei dem im Fall eines Stoßes wenigstens ein Stromkreis unterbrochen wird, dadurch gekennzeichnet, daß es mit zwei Trägheitssicherungen (82, 84) nach einem der vorhergehenden Ansprüche ausgerüstet ist, die parallel zur Hauptbewegungsrichtung des Fahrzeugs und in entgegengesetzten Richtungen angeordnet und mit diesem Stromkreis des Fahrzeugs verbunden sind.

7. Fahrzeug nach Anspruch 7, dadurch gekennzeichnet, daß jede der beiden Trägheitssicherungen (82, 84) jeweils in Nähe eines der beiden oberen Seitenränder (86, 88) der Karrosserie des Fahrzeugs angeordnet ist.
